(19) Europäisches Patentamt
European Patent Office
Office européen des brevets

(11) EP 0 669 365 B1

(12) EUROPEAN PATENT SPECIFICATION

(45) Date of publication and mention
of the grant of the patent:
24.11.1999 Bulletin 1999/47

(51) Int Cl.⁶: **C08J 3/22**, C08K 3/34,
C08L 23/02, B41M 1/30,
B41M 5/24

(21) Application number: 95102048.6

(22) Date of filing: 15.02.1995

(54) **Marking composition, molding thereof and marking method**

Markier-Zusammensetzung, daraus hergestelltes Formteil und Markierungsverfahren

Composition pour marquage, produit moulé et méthode de marquage

(84) Designated Contracting States:
DE ES FR GB IT NL

(30) Priority: 24.02.1994 JP 5001294

(43) Date of publication of application:
30.08.1995 Bulletin 1995/35

(73) Proprietor: Nippon Kayaku Kabushiki Kaisha
Tokyo (JP)

(72) Inventors:
• Shinmoto, Masaki
Yono-shi (JP)
• Hayashihara, Shoiti
Yono-shi (JP)

(74) Representative: Türk, Gille, Hrabal
Patentanwälte - European Patent Attorneys,
Brucknerstrasse 20
40593 Düsseldorf (DE)

(56) References cited:
EP-A- 0 036 680          EP-A- 0 111 357
EP-A- 0 447 032

• MODERN PLASTICS INTERNATIONAL, vol. 23,
no. 110, October 1993 LAUSANNE, pages 29-32,
XP 000397542 J.MVERS 'lasers make their mark
on variety of plastic parts'

**Description**

FIELD OF THE INVENTION

The present invention relates to a marking composition, moldings thereof and a marking method. More particularly, it relates to a polyolefin resin-based marking composition capable of developing vivid colors from dark brown to black on irradiation with laser beam, moldings of such a composition,and a marking method using laser beams.

BACKGROUND OF THE INVENTION

Recently, for marking of letters and signs such as maker's name, product name, date of production, etc., on the surfaces of various commercial articles, for example, electronic parts such as IC's, resistors, condensers, inductors, etc., electrical parts such as relays, switches, connectors, printed circuit boards, etc., housings of electrical devices, automobile parts, machine parts, cables, sheets, packaging sheets, cards, various containers of foods, cosmetics, toiletaries and medicines, caps of containers, etc., the laser marking system is popularly employed for its various advantages such as non-contact quick marking and easiness of automation and process management.

In laser marking, laser beams are applied directly to the surface of an objective article made of a high-molecular organic material, metal or other substance to cause a change of state of the article surface or discoloration or decoloration of the colorant in the irradiated area, and marking is done by making use of such chemical changes. This marking method, however, has certain problems in practical applications. For example, in case of using a polyolefine resin as base material for marking, the laser beams may pass through the resin, failing to perform desired marking thereon, or even when the laser beams are absorbed to cause etching, it may happen that the resin be simply melted and no clear marking can be accomplished. Also, even when a colorant is used, vivid color development may fail to take place.

In order to solve these problems when a laser marking method is applied on polyolefin resin molded articles, many researches have been made on the color formers capable of developing vivid colors. For example, there have been proposed use of yellow iron oxide as color former in JP-A-60-155493, use of inorganic lead compounds in JP-A-61-69488 and JP-A-1-3062285, use of manganese violet and cobalt violet in JP-A-2-204888 and use of compounds of metals such as mercury, cobalt, copper, bismuth and nickel in USP 4861620. However, these compounds involve the serious problems in practical use, such as safety and influence on the environment, as they are basically composed of heavy metals. Also, in the case of heavy metals such as yellow iron oxides, since the compounds themselves are tinted, it is impossible to use resins colored in various hues and accordingly the scope of their use is limited. JP-A-60-110737 proposes use of pearlescent pigments as non-tinted compounds, but since these compounds have iridescent luster although not tinted, they may develop a foreign color tone when applied to an article for which no pearly luster is needed.

Even as a color former, there is no complete colorless one. Therefore, there are such problems that if the amount of color former increases, the products to be marked are influenced in hue and color tone, the viscosity of the resin composition increases and the resin composition is influenced in its moldability, the abrasion property increases and the molding machine and kneader are injured by the abrasion at the molding. Accordingly, even if the color former itself is colorless and its amount to be used is a very little, a marking composition to be colored in a clear dark brown to black by laser beam is required.

EP-A-0111357 discloses a method for obtaining a black mark on the surface of a molded article formed from a polyolefin resin composition containing a silicon compound by irradiating with a laser beam. As the silicon compound there are mentioned calcium metasilicate, aluminum silicate and kaoline.

EP-A-0447032 discloses a markable white pigment composition comprising a first pigment which is markable by UV-laser and a second pigment which is nonabsorbing in the UV-region and which has white appearance. These pigments are used for coating a wire. As the second pigment silicon dioxide is mentioned.

SUMMARY OF THE INVENTION

In order to solve the problems mentioned above, the present inventors conducted extensive studies, and attained the present invention.

The present invention relates to a polyolefin resin marking composition containing from 0.005% by weight to less than 2% by weight of mica based on the polyolefin composition.

Preferred embodiments are defined in subclaims 2 to 7.

The present invention further relates to a resin molded article formed by molding the above polyolefin resin marking compositions, a master batch for such resin molded article, wherein 0.5 to 5% by weight of mica is contained based on the polyolefin composition, and a marking method comprising irradiating an infrared laser beam to the above resin molded article.

DETAILED DESCRIPTION OF THE INVENTION

The marking composition, moldings thereof and marking method according to the present invention are explained in detail below.

Typical examples of the polyolefin resins usable for the marking composition of the present invention are polyethylene and polypropylene. The polyolefin resins used in the present invention are preferably one whose melt index (MI) is in the range of about 0.01 to 60, preferably about 0.02 to 55.

The mica used in the present invention acts as a color former, especialy color former developing dark brown to black in laser marking. The micas usable in the present invention includes micas belonging to the muscovite series such as common mica, lepidolite, paragonite, sericite, roscoelite and illite; biotite series such as biotite, phlogopite, lepidomelane and zinwaldite; natural micas such as glauconite, celadonite, muscovite, suzorite, palagonite and vermiculite; and synthetic micas. Of these micas, muscovite, phlogopite, suzorite and synthetic micas are preferred.

The above-defined micas can be used in combination.

The weight-average particle size of the mica(s) used in the present invention is not specified, but in view of influence on the color tone of the resin, it should be not greater than 700 μ, preferably not greater than 10 μ, more preferably in the range of about 0.5 to 10 μ. The amount of micas to be used may be from 0.005% by weight to less than 2% by weight, preferably from about 0.005% by weight to less than 1% by weight, more preferably from about 0.01% by weight to less than 1% by weight, and the most preferably from about 0.01% by weight to about 0.8% by weight.

In the present invention, when said mica(s) alone is used, the composition develops a dark brown color, but when titanium dioxide is added, the reddish tinge of the dark brown color is eliminated to present a gray to black color, enhancing vividness of the formed mark. Any of the commercial products of titanium dioxide can be used in the present invention, but when no transparency of the mark is required and development of a black color is desired, it is recommended to use the type of titanium dioxide which is commercially sold as pigment material, and when it is desired to form a grayish color while maintaining transparency of the mark, it is recommended to use particulate titanium dioxide. Both rutile type and anatase type titanium dioxide can be used as pigment material. Particulate titanium dioxide designates titanium dioxide having a particle size less than 0.1 μ. A commercial product of such particulate titanium dioxide is available from TAYCA CORPORATION under the trade name of MT-500B. The amount of titanium dioxide used in the composition of this invention is not specified, but preferably this compound is used in as small an amount as possible for the economical reason. Usually its amount may be less than 1,000% by weight based on said silicon compound, but when fine particle titanium dioxide is used, its amount is preferably about 20 to 1,000% by weight based on said silicon compound. When titanium dioxide is used in an excess amount, the opacifying properties of titanium oxide will be resuscitated to weaken the developed color tone, so that it is preferred to limit the amount of titanium dioxide used within a range of about 20 to 400% by weight, more preferably about 30 to 300% by weight, depending on the desired color tone of the mark.

The marking composition of the present invention may contain additives as desired. Such additives include colorants, fillers, lubricants, plasticizers, etc.

The colorants usable in the present invention are not specifically restricted, but the colorants other than black type are preferable. For example, said colorants include various types of organic pigments such as phthalocyanine pigments, azo pigments, diazo pigments, quinacridone pigments, anthraquinone pigments, flavanthrone yellow, perinone orange, perylene scarlet pigments, dioxazine violet pigments, condensed azo pigments, azomethine pigments and methine pigments, and inorganic pigments such as titanium oxide, lead sulfate, zinc oxide, chrome yellow pigments, zinc yellow pigments, chrome vermilion, red iron oxide, cobalt purple, Prussian blue, chrome green, chrome oxide and cobalt green. These organic and inorganic pigments are added within limits not affecting the vividness of the color mark formed, for example in an amount of 0.001 to 3% by weight based on the polyolefin resin. Incidentally, even the black type colorants, they are usable within the limited range so long as they do not affect the vividness of the formed color mark.

The fillers usable in the present invention include those ordinarily used in the polyolefin resin compositions, such as calcium carbonate, alumina, and glass fiber. Filler is added within limits not affecting the vividness of the formed color mark, for example in an amount of 0.001 to 3% by weight based on the polyolefin resin.

The lubricants usable in the present invention include stearic acid, behenic acid and its esters or salts, waxes such as carnauba wax and polyethylene wax, and various types of surfactants. Lubricant is added as desired in an amount of usually 0.1 to 5.0% by weight based on the polyolefin resin. As plasticizer, there can be used esters of phthalic acid, phosphoric acid, sebacic acid and the like. Other additives normally used in plastics processing, such as antioxidant, heat stabilizer, light stabilizer, flame retardant, etc., can also be incorporated in the composition of the present invention. These additives may be used in the form of powder or as a masterbatch in the preparation of the polyolefin resin-based marking composition of the present invention.

The polyolefin resin marking composition of the present invention can be obtained by adding a mica to a base polyolefin resin, further adding, as desired, titanium dioxide and, if necessary, other additive(s) such as colorant, filler, lubricant, plasticizer, heat stabilizer, etc., and uniformly mixing and kneading said materials by using mixer such as an extruder, a twin-screw kneader and a roll mill.

Further, the polyolefin resin marking composition according to the present invention can be obtained by first producing a masterbatch containing a mica in high concentration and then adding thereto a polyolefin resin, and additives such as fillers if desired, and then mixing and kneading them uniformly by using a mixing and kneading machine. The thus obtained composition of the present invention is molded in the form as it is and, if necessary, further blended with appropriate auxiliaries such as polyolefin resin and filler, by a per se known method to obtain a resin molding.

Incidentally, a masterbatch containing mica in high concentration can be obtained by adding, to a polyolefin resin, mica and titanium dioxide if desired and additives such as a color former, filler, lublicant, plasticizer, heat-stabilizer, and the like, if necessary, mixing and kneading them uniformly by using a mixing and kneading machine such as an extruder, twin-screw kneader, roll mill, etc., and then processing the mixture into a desired form such as pellets or marbles. The content of said mica(s) in the masterbatch is preferably about 0.5 to 5% by weight, more preferably 0.5 to 2% by weight based on the polyolefin resin.

The resin moldings include two-dimensional moldings such as films and three-dimensional moldings such as containers,caps, parts, etc.

The two-dimensional moldings such as film can be produced by a known method for forming a film of thermoplastic resin, such as inflation method, multiple-layer inflation method, T-die film forming method, flat film forming method using simultaneous or successive biaxial stretching technique, tubular film forming method, etc. The thus produced films can be applied to the same field of use as the ordinary thermoplastic resin films, such as food packages, textile packages, haberdashery packages, packages of chemicals, tapes, insulating materials, agricultural films, various types of sheets, various types of seals, labels, etc. Also, the films produced according to the present invention can be laminated on various types of substrates, for example, paper such as craft paper or slick paper, plastic films, metal foils such as aluminum foil, etc., and the thus obtained laminates can be applied to various uses such as containers of foods or drinks such as milk, alcoholic beverages, etc., medicinal packages, food packages, various types of sheets, various types of seals, labels, etc.

The three-dimensional moldings using the polyolefin resin-based laser marking composition according to the present invention can be produced by known methods such as injection molding, extrusion molding, blow molding, rotational molding, expansion molding, powder molding, vacuum molding, etc., an appropriate method being selected according to the type of the molding to be produced. Such three-dimensional moldings include the ordinary commercial articles mainly composed of thermoplastic resins, for example, containers of foods, detergents, medicines, cosmetics, drinking water, drinks, etc., caps of such containers, food trays, tubing, medical vessels, clothing articles, housings of domestic electrical appliances,electrical parts, home appliances, automobile parts such as bumper, interior trims, audio articles such as tape cassette, information processing articles such as floppy disc, pipes, building materials, industrial parts, various types of containers, clothing containers, multi-layered containers, haberdasheries, various types of business machines, stationary, etc.

When laser beam is applied to the surface of a two-dimensional or three-dimensional molding such as mentioned above, a dark brown to black mark with a vivid contrast is formed at the irradiated portion. The laser beam used for irradiation may be far-infrared laser such as carbon dioxide laser (wavelength: approx. 10,600 nm), near-infrared laser such as YAG laser (wavelength: approx. 1,060 nm), excimer laser or the like, but infrared laser, especially far-infrared laser is preferred.

As the laser beam intensity, for example, in case of TEA carbon dioxide gas laser, the energy density at the irradiation source is about 0.5 to 1 $J/cm^2$, and the energy density irradiated on the surface of resin molded article according to the present invention is, for example, 2.5-20 $J/cm^2$, preferably 2.8-16 $J/cm^2$, and more preferably 3.5-16 $J/cm^2$. The energy density (Ed) at the irradiated portion becomes higher than that of irradiation source, because the laser beam is condensed to irradiate to the surface of resin molded article. The energy density can be obtained by the following calculation formula:

$$Ed = \frac{\text{(Total energy intensity at irradiation source)}}{\text{(Irradiation area when no mask is used)}}$$

The color former used in the present invention is small in quantity, so that it scarcely gives any adverse effect to the quality and workability of the resin.

The present invention is described more particularly in the following Examples, but it should be recognized that the scope of the present invention is not restricted to these Examples. In the following Examples, @ indicates that a dark brown or black mark with excellent vividness was obtained, o indicates that a dark brown or black mark with good vividness was obtained, and x indicates that the vividness of the mark was bad or there was merely obtained a white mark.

Referential Example 1

100 ml of glass beads (1 mmφ), 100 g of mica (Kuralite mica 600W produced by Kuraray Co., Ltd.; average particle size: 8 μ) and 186 g of ethyl alcohol were supplied and treated in a 500 ml ceramic sand mill for 8 hours. Then the glass beads were filtered out, ethyl alcohol was removed by evaporation under reduced pressure and the resultant product was dried to obtain 99 g of particulate mica having an average particle size of 2 μ.

Example 1

1,000 parts of polyethylene (SHOWLEX S5003BH produced by Showa Denko Co., Ltd.; MI: 0.3) and 0.5 parts of mica (Kuralite mica 600W; average particle size: 8 μ) were kneaded by a twin-screw kneader at 200°C and ground by a ROTOPLEX CUTTING MILL, and then the particles smaller than 1 mm in major diameter were eliminated to obtain a marking composition of the present invention. This composition was press molded into a 0.5 mm thick film at 180°C by using a 50-ton press and marking was carried out on the surface of said film by using carbon dioxide laser (XY mark 7000 mfd. by Coherent Hull) to obtain a vivid dark brown mark (◎).

Example 2

1,000 parts of polyethylene (SHOWLEX S5003BH; MI: 0.3) and 5 parts of fine particle mica obtained in Referential Example 1 were kneaded by a twin-screw kneader at 200°C and ground by a ROTOPLEX CUTTING MILL, and then the particles smaller than 1 mm in major diameter were eliminated to obtain a marking composition of the present invention. This composition was press molded into a 0.5 mm thick film at 180°C by using a 50-ton press and marking was conducted on the surface of said film by using carbon dioxide laser (XY mark 7000) to obtain a vivid dark brown mark (◎).

Example 3

1,000 parts of polyethylene (SHOWLEX S5003BH; MI: 0.3), 5 parts of mica (Kuralite mica 30C produced by Kuraray Co., Ltd.; average particle size: 680 μ) and 5 parts of titanium dioxide for pigment (TIPAQUE CR-60 produced by Ishihara Sangyo KK) were kneaded by a twin-screw kneader at 200°C and ground by a ROTOPLEX CUTTING MILL, and then the particles smaller than 1 mm in major diameter were eliminated to obtain a marking composition of the present invention. This composition was press molded into a 0.5 mm thick film at 180°C by using a 50-ton press and marking was performed on the surface of said film to obtain a vivid black mark (◎).

Example 4

1,000 parts of polyethylene (UP POLYETHYLENE J110K produced by Chisso Corp.; MI: 10), 1 part of fine particle mica obtained in Referential Example 1 and 10 parts of particulate titanium dioxide (MT-500B produced by TAYCA CORPORATION) were kneaded by a twin-screw kneader at 160°C and ground by a ROTOPLEX CUTTING MILL, and then the particles smaller than 1 mm in major diameter were eliminated to obtain a marking composition of the present invention. This composition was molded into a plate at 150°C by using an injection molding machine (SAV-40 mfd. by Yamashiro Fine Machinery Co., Ltd. hereinafter said machine is referred to as "SAV-40") and marking was done on the surface of said plate by using carbon dioxide laser (XY mark 7000) to obtain a vivid grayish black mark (◎).

Example 5

1,000 parts of polypropylene (TONEN POLYPROPYLENE J215 produced by Tonen Corp.; MI: 15) and 1 part of mica (Suzolite mica 325S produced by Kuraray Co., Ltd.; average particle size: 40 μ) were kneaded by a twin-screw kneader at 220°C and ground by a ROTOPLEX CUTTING MILL, and then the particles smaller than 1 mm in major diameter were eliminated to obtain a marking composition of the present invention. This composition was molded into a plate at 220°C by using an injection molding machine (SAV-40) and marking was conducted on the surface of said plate by using carbon dioxide laser (XY mark 7000) to obtain a vivid dark brown mark (o).

Comparative Example 1

1,000 parts of polypropylene (CHISSO POLYPROPYLENE K-8140T produced by Chisso Corp.; MI: 40) and 2 parts of kaolin (average particle size: 2 μ) were kneaded by a twin-screw kneader at 220°C and ground by a ROTOPLEX CUTTING MILL, and then the particles smaller than 1 mm in major diameter were eliminated to obtain a marking composition. This composition was molded into a plate at 220°C by using an injection molding machine (SAV-40) and marking was performed on the surface of said plate by using carbon dioxide laser (XY mark 7000) to obtain a dark brown mark (o).

Example 6

1,000 parts of polypropylene (ASAHI KASEI POLYPROPYLENE E100 produced by Asahi Chemical Industry Co., Ltd.; MI: 0.5) and 5 parts of artificial mica (MK-100 produced by CO-OP Chemical Co., Ltd.; average particle size: 2.5 μ) were kneaded by a twin-screw kneader at 220°C and ground by a ROTOPLEX CUTTING MILL, and then the particles smaller than 1 mm in major diameter were eliminated to obtain a marking composition of the present invention. This composition was press molded into a 0.5 mm thick film at 200°C by using a 50-ton press and marking was practiced on the film surface by using carbon dioxide laser (XY mark 7000) to obtain a vivid dark brown mark (◎).

Example 7

1,000 parts of polyethylene (UP POLYETHYLENE J110K produced by Chisso Corp.; MI: 10), 0.3 parts of mica (KURALITE MICA 600W; average particle size: 8 μ) and 0.3 parts of titanium dioxide (TIPAQUE R-820) were kneaded by a twin-screw kneader at 160°C and ground by a ROTOPLEX CUTTING MILL, and then the particles smaller than 1 mm in major diameter were eliminated to obtain a marking composition of the present invention. This composition was molded into a plate by an injection molding machine (SAV-40) at 150°C and marking was performed on the plate surface by using carbon dioxide laser (XY mark 7000) to obtain a vivid grayish black mark (◎).

Comparative Example 2

1,000 parts of polyethylene (SHOWLEX S5003BH; MI: 0.3) and 1 part of blast furnace slag (average particle size: 8 μ) were kneaded by a twin-screw kneader at 200°C and ground by a ROTOPLEX CUTTING MILL, and then the particles smaller than 1 mm in major diameter were eliminated to obtain a marking composition. This composition was press molded into a 0.5 mm thick film by a 50-ton press at 180°C and marking was carried out on the film surface by using carbon dioxide laser (XY mark 7000) to obtain a vivid dark brown mark (o).

Comparative Example 3

1,000 parts of polyethylene (SHOWLEX S5003BH; MI: 0.3) and 1 part of siliceous sand (average particle size: 10 μ) were kneaded by a twin-screw kneader at 200°C and ground by a ROTOPLEX CUTTING MILL, and then the particles smaller than 1 mm in major diameter were eliminated to obtain a marking composition. This composition was press molded into a 0.5 mm thick film by a 50-ton press at 180°C and marking was performed on the film surface by using carbon dioxide laser (XY mark 7000) to obtain a vivid dark brown mark (◎).

Comparative Example 4

1,000 parts of polyethylene (SHOWLEX S5003BH; MI: 0.3) and 1 part of diatomaceous earth (average particle size: 6 μ) were kneaded by a twin-screw kneader at 200°C and ground by a ROTOPLEX CUTTING MILL, and then the particles smaller than 1 mm in major diameter were eliminated to obtain a marking composition. This composition was press molded into a 0.5 mm thick film at 180°C by using a 50-ton press and marking was conducted on the film surface by using carbon dioxide laser (XY mark 7000) to obtain a vivid dark brown mark (◎).

Comparative Example 5

1,000 parts of polyethylene (UP POLYETHYLENE J110K produced by Chisso Corp.; MI: 10), 3 parts of blast furnaces slag and 10 parts of particulate titanium dioxide (MT-500B produced by TAYCA CORPORATION) were kneaded by a twin-screw kneader at 160°C and ground by a ROTOPLEX CUTTING MILL, and then the particles smaller than 1 mm in major diameter were eliminated to obtain a marking composition. This composition was molded into a plate at 150°C by using an injection molding machine (SAV-40) and marking was carried out on the plate surface by using carbon dioxide laser (XY mark N7000) to obtain a vivid black mark (◎).

Comparative Example 6

1,000 parts of polyethylene (UP POLYETHYLENE J110K produced by Chisso Corp.; MI: 10) and 1 part of talc (average particle size: 2 μ) were kneaded by a twin-screw kneader at 160°C and ground by a ROTOPLEX CUTTING MILL, and then the particles smaller than 1 mm in major diameter were eliminated to obtain a marking composition. This composition was molded into a plate by an injection molding machine (SAV-40) at 150°C and marking was performed on the plate surface by using carbon dioxide laser (XY mark 7000) to obtain a vivid dark brown mark (◎).

Comparative Example 7

1,000 parts of polyethylene (SHOWLEX S5003BH; MI: 0.3) and 50 parts of mica (Kuralite mica 600W; average particle size: 8 μ) were kneaded by a twin-screw kneader at 200°C and ground by a ROTOPLEX CUTTING MILL, and then the particles smaller than 1 mm in major diameter were eliminated to obtain a marking composition for comparison. This composition was press molded into a 0.5 mm thick film at 180°C by using a 50-ton press and marking was carried out on the film surface by using carbon dioxide laser (XY mark 7000). There was merely obtained a white mark (✕).

Comparative Example 8

Polyethylene (SHOWLEX S5003BH; MI: 0.3) was press molded into a 0.5 mm thick film at 180°C by using a 50-ton press and marking was performed on the film surface by using carbon dioxide laser (XY mark 7000). No mark could be formed (✕).

Comparative Example 9

1,000 parts of polyethylene (SHOWLEX S5003BH; MI: 0.3) and 50 parts of talc (average particle size: 2 μ) were kneaded by a twin-screw kneader at 200°C and ground by a ROTOPLEX CUTTING MILL, and then the particles smaller than 1 mm in major diameter were eliminated to obtain a marking composition. This composition was press molded into a 0.5 mm thick film by a 50-ton press at 180°C and marking was performed on the film surface by using carbon dioxide laser (XY mark 7000). There was merely obtained a white mark (✕).

Experimental Example

Polyethylene (SHOWLEX S5003BH, manufactured by Showa Denko), was mixed with a color former in a predetermined amount and kneaded. From the mixture, a specimen was produced in a form of plate. The marking was conducted on the surface of the specimen by irradiating a laser beam by using carbon dioxide laser (manufactured by Laser Technique Co., Blayzer 6000, output 26.1 Kv, total energy 3.8 J) to find relation between the energy density and the vividness of mark formed. The results obtained are shown in Table 1. In Table 1, o indicates that a vivid dark brown mark was obtained, A indicates that the mark formed is distinguishable dark brown, and ✕ indicates that the mark formed is not distinguishable.

Table 1

| No. | Color former | Added amount (%) | Energy density at irradiated portion (J/cm$^2$) | | | | |
|---|---|---|---|---|---|---|---|
| | | | 2.2 | 2.9 | 4.1 | 6.5 | 8.6 |
| 1 | Mica | 0.1 | ✕ | △ | ○ | | |
| | | 0.3 | ✕ | ○ | | | |
| 2* | Kaolin | 0.1 | | ✕ | △ | ○ | |
| | | 0.3 | ✕ | △ | ○ | | |
| 3* | Blast furnace slag | 0.1 | | ✕ | △ | ○ | |
| | | 0.3 | ✕ | △ | ○ | | |
| 4* | Talc | 0.1 | | ✕ | △ | ○ | |
| | | 0.3 | ✕ | △ | ○ | | |
| 5* | Silicon dioxide | 0.1 | | | ✕ | △ | ○ |
| | | 0.3 | | | ✕ | △ | ○ |

* comparison

According to the present invention, a laser irradiated portion of polyolefin resin was colored in dark brown to black even though the amount of color former to be added is as small as less than 0.5% by weight based on the polyolefin resin without affecting the color hue or tone of the product to be marked, and without affecting physical properties such as moldability, abrasion property, etc. of the resin composition to be used.

## Claims

1. A polyolefin resin marking composition containing from 0.005% by weight to less than 2% by weight of mica based on the polyolefin resin.

2. A polyolefin resin marking composition according to claim 1 containing from 0.005% by weight to less than 1% by weight of mica based on the polyolefin resin.

3. A polyolefin resin marking composition according to claim 1 or 2 containing from 0.005% by weight to less than 0.5% by weight of mica based on the polyolefin resin.

4. A polyolefin resin marking composition according to any of Claim 1 to 3, wherein the content of the mica is from 0.005% by weight to 0.4% by weight based on the polyolefin resin.

5. A polyolefin resin marking composition according to Claim 1, 2, 3 or 4, wherein the polyolefin resin is a polyethylene or a polypropylene.

6. A polyolefin resin marking composition according to any of Claim 1 to 5, wherein the weight average particle diameter of the mica is 10 $\mu$ or less.

7. A polyolefin resin marking composition according to any of Claim 1 to 5, which contains 20-1000% by weight of titanium oxide based on the total amount of the mica.

8. A resin molded article formed by molding the polyolefin resin marking composition according to Claims 1 to 7.

9. A resin molded article according to Claim 8, wherein the resin molded article is containers.

10. A resin molded article according to Claim 8, wherein the resin molded article is films.

11. A masterbatch for resin molded article according to Claim 8, wherein 0.5-5% by weight of mica is contained based on the polyolefin resin.

12. A marking method of a resin molded article comprising irradiating an infrared ray laser beam to the resin molded article of Claims 8 to 10.

13. A marking method according to Claim 12, wherein the infrared ray laser beam is a far infrared ray laser beam.

14. A marking method according to Claim 12, wherein the energy of the infrared ray laser beam on the surface of the resin molded article is 2.5-20 J/cm$^2$.

## Patentansprüche

1. Polyolefinharz-Markierungszusammensetzung, enthaltend von 0,005 Gew.-% bis weniger als 2 Gew.-% Glimmer bezogen auf das Polyolefinharz.

2. Polyolefinharz-Markierungszusammensetzung nach Anspruch 1, enthaltend von 0,005 Gew.-% bis weniger als 1 Gew.-% Glimmer bezogen auf das Polyolefinharz.

3. Polyolefinharz-Markierungszusammensetzung nach Anspruch 1 oder 2, enthaltend von 0,005 Gew.-% bis weniger als 0,5 Gew.-% Glimmer bezogen auf das Polyolefinharz.

4. Polyolefinharz-Markierungszusammensetzung nach einem der Ansprüche 1 bis 3, wobei der Anteil an Glimmer von 0,005 Gew.-% bis 0,4 Gew.-% bezogen auf das Polyolefinharz beträgt.

5. Polyolefinharz-Markierungszusammensetzung nach Anspruch 1, 2, 3 oder 4, wobei das Polyolefinharz ein Polyethylen oder ein Polypropylen ist.

6. Polyolefinharz-Markierungszusammensetzung nach einem der Ansprüche 1 bis 5, wobei der gewichtsmittlere Partikeldurchmesser des Glimmers 10 µ oder weniger beträgt.

7. Polyolefinharz-Markierungszusammensetzung nach einem der Ansprüche 1 bis 5, die 20 - 1000 Gew.-% Titanoxid bezogen auf die Gesamtmenge an Glimmer enthält.

8. Harzformteil, geformt durch Formen der Polyolefinharz-Markierungszusammensetzung nach einem der Ansprüche 1 bis 7.

9. Harzformteil nach Anspruch 8, wobei das Harzformteil Behälter ist.

10. Harzformteil nach Anspruch 8, wobei das Harzformteil Filme ist.

11. Vormischung für ein Harzformteil nach Anspruch 8, in der 0,5 - 5 Gew.-% Glimmer bezogen auf das Polyolefinharz enthalten sind.

12. Markierungsverfahren für ein Harzformteil, umfassend Einstrahlen von InfrarotLaserstrahlen auf ein Formteil nach den Ansprüchen 8 bis 10.

13. Markierungsverfahren nach Anspruch 12, wobei die Infrarot-Laserstrahlen Ferninfrarot-Laserstrahlen sind.

14. Markierungsverfahren nach Anspruch 12, wobei die Energie der Infrarot-Laserstrahlen auf der Oberfläche des Harzformteils 2,5- 20 J/cm$^2$ beträgt.

**Revendications**

1. Composition pour marquage à base de résine polyoléfinique, contenant de 0,005 % en poids à moins de 2 % en poids de mica par rapport à la résine polyoléfinique.

2. Composition pour marquage à base de résine polyoléfinique selon la revendication 1, contenant de 0,005 % en poids à moins de 1 % en poids de mica par rapport à la résine polyoléfinique.

3. Composition pour marquage à base de résine polyoléfinique selon la revendication 1 ou 2, contenant de 0,005 % en poids à moins de 0,5 % en poids de mica par rapport à la résine polyoléfinique.

4. Composition pour marquage à base de résine polyoléfinique selon l'une quelconque des revendications 1 à 3, dans laquelle la teneur du mica est de 0,005 % en poids à 0,4 % en poids par rapport à la résine polyoléfinique.

5. Composition pour marquage à base de résine polyoléfinique selon la revendication 1, 2, 3 ou 4, dans laquelle la résine polyoléfinique est un polyéthylène ou un polypropylène.

6. Composition pour marquage à base de résine polyoléfinique selon l'une quelconque des revendications 1 à 5, dans laquelle le diamètre particulaire moyen en poids du mica est de 10 µ ou moins.

7. Composition pour marquage à base de résine polyoléfinique selon l'une quelconque des revendications 1 à 5, contenant de 20 à 1 000 % en poids d'oxyde de titane par rapport à la quantité totale du mica.

8. Article de résine moulé, formé par moulage de la composition pour marquage à base de résine polyoléfinique selon les revendications 1 à 7.

9. Article de résine moulé selon la revendication 8, dans lequel l'article de résine moulé est un récipient.

**10.** Article de résine moulé selon la revendication 8, dans lequel l'article de résine moulé est un film.

**11.** Mélange maître pour article de résine moulé selon la revendication 8, dans lequel de 0,5 à 5 % en poids de mica, est contenu par rapport à la résine polyoléfinique.

**12.** Procédé de marquage d'un article de résine moulé, selon lequel on irradie un faisceau laser à rayonnement infrarouge sur l'article de résine moulé des revendications 8 à 10.

**13.** Procédé de marquage selon la revendication 12, dans lequel le faisceau laser à rayonnement infrarouge est un faisceau laser à rayonnement infrarouge lointain.

**14.** Procédé de marquage selon la revendication 12, dans lequel l'énergie du faisceau laser à rayonnement infrarouge, sur la surface de l'article de résine moulé, est de 2,5 à 20 J/cm$^2$.